# EUROPÄISCHE PATENTSCHRIFT

(11) **EP 3 646 665 B1**
(45) Veröffentlichungstag und Bekanntmachung des Hinweises auf die Patenterteilung: **23.03.2022**
(21) Anmeldenummer: 18733588.0
(22) Anmeldetag: 22.06.2018
(51) Int. Cl.: H05B 1/02

(54) **ANORDNUNG ZUM SCHALTEN EINES WIDERSTANDS**
ARRANGEMENT FOR SWITCHING A RESISTANCE
CIRCUIT POUR COMMUTER UNE RESISTANCE

(30) Priorität: 30.06.2017 DE 102017114714
(43) Veröffentlichungstag der Anmeldung: 06.05.2020
(73) Patentinhaber: Webasto SE, 82131 Stockdorf (DE)
(72) Erfinder: HENNE, Alexander, 82131 Stockdorf (DE); BOTZENMAYER, Norbert, 82131 Stockdorf (DE); RECHBERGER, Hans, 82131 Stodckdorf (DE)
(74) Vertreter: Zech, Stefan Markus
(86) Internationale Anmeldenummer: PCT/EP2018/066703
(87) Internationale Veröffentlichungsnummer: WO 2019/002112

(56) Entgegenhaltungen:
- DE-A1-102010 028 533
- US-A1- 2012 008 927
- US-A1- 2015 260 429

## Beschreibung

Die Erfindung betrifft eine Anordnung, umfassend einen wärmeabgebenden Widerstand, eine Steuerungsvorrichtung zum Schalten des Widerstandes sowie ein (insbesondere geerdetes oder auf einem erdähnlichen Bezugspotential liegendes) Bauteil, das auf einem Potential ohne direkten Bezug zu einer Ansteuerspannung liegt, insbesondere ein Gehäuse und/oder ein Chassisbauteil, wobei der Widerstand in räumlicher Nähe zu dem Bauteil, insbesondere Gehäuse oder Chassisbauteil, angeordnet ist, nach Anspruch 1 sowie ein entsprechendes Steuerungsverfahren nach Anspruch 10.

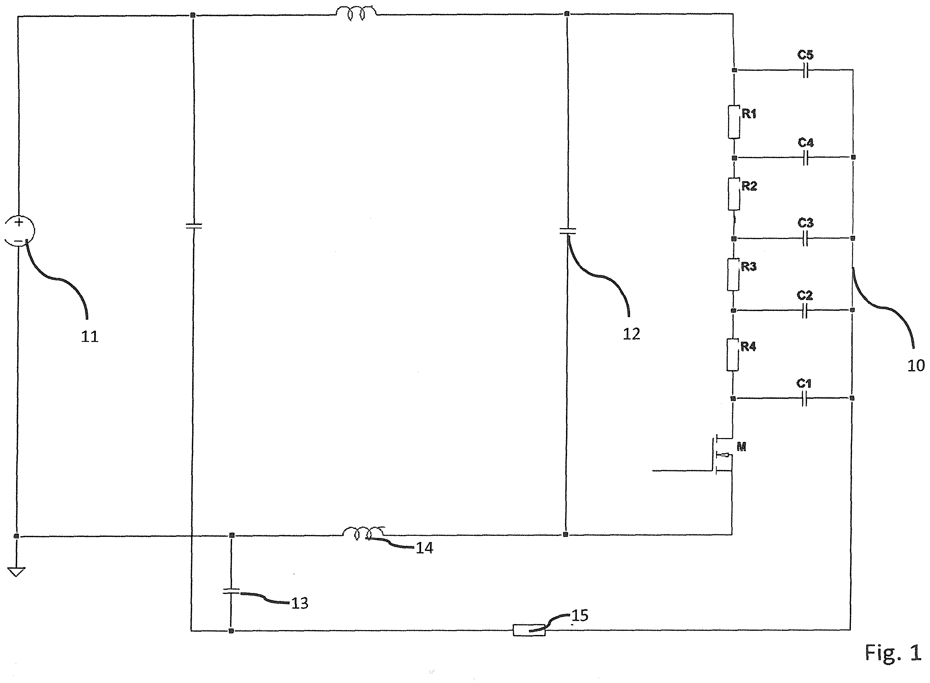

Fig. 1 illustriert den Stand der Technik und zeigt einen Widerstand, der sich in der Nähe eines Gehäuses befindet und durch die Widerstände R1 bis R4 symbolisch dargestellt wird. Der Widerstand wird zur Wärmeabfuhr am Gehäuse gekühlt.

Die Kondensatoren C1 bis C5 entsprechen einer symbolischen Darstellung einer Kapazität, die dem Widerstand zugeordnet ist und durch die räumlich nahe Anbindung des Widerstandes an dem Gehäuse entsteht.

Der Transistor M schaltet den Widerstand (R1 bis R4) ein bzw. aus. Wenn der Transistor M ausgeschaltet wird, liegt der komplette Widerstand (R1 bis R4) auf Versorgungsspannung. Wird der Transistor M nun eingeschaltet, verändert sich die Spannung über dem Widerstand (R1 bis R4). Ein (in Fig. 1) unteres Ende von R4 geht gegen 0 V, während ein (in Fig. 1) oberes Ende von R1 weiterhin auf Versorgungsspannung liegt. Die mittlere Spannung, also eine zwischen einem (in Fig. 1) unteren Ende von R2 und einem (in Fig. 1) oberen Ende von R3 des vollständigen Widerstandes (R1 bis R4) entspricht der halben Versorgungsspannung.

Dies hat zur Folge, dass die Kapazität (C1 bis C5) in diesem schematischen Beispiel ganz oder zumindest teilweise entladen wird. C1 wird beispielsweise "vollständig" entladen, während C3 auf die halbe Versorgungsspannung entladen wird. Im Mittel hat dies zur Folge, dass die gesamte Kapazität um die halbe Versorgungsspannung entladen wird.

Wenn der Transistor M ausgeschaltet wird, wiederholt sich dieses Phänomen im Prinzip. Die Kapazitäten werden dabei nicht entladen, sondern (bis zur Versorgungsspannung) geladen.

Das beschriebene Laden und Entladen der Kondensatoren kann je nach Geschwindigkeit zu deutlichen elektromagnetischen Störungen führen (sowohl zu leitungsgebundenen als auch zu abgestrahlten Störungen).

Insbesondere wenn der Widerstand (R1 bis R4) schnell geschaltet wird (und eine verteilte Kapazität zur Erde hat), können Störungen auf einem Gehäuse und/oder einem Kabelschirm und/oder Erdungsleitungen auftreten. Übliche Gegenmaßnahmen sind:
- Eine Schirmung, damit der Widerstand nicht mehr gegen Erdpotential koppelt,
- Filterkomponenten (Common Mode Drossel, Y-Kondensatoren),
- Verlangsamung der Taktung (Schaltfrequenz, Schaltzeit).

Eine Schirmung ist jedoch nicht in allen Fällen möglich oder oft nur mit deutlichen zusätzlichen Kosten integrierbar. Eine Schirmung sorgt zudem dafür, dass sich eine eventuelle Wärmeanbindung verschlechtert, da sowohl eine Schirmlage als auch mindestens eine weitere Isolationslage benötigt wird.

Je nach Applikation (im Hinblick auf Spannung und Strom) können Filterkomponenten vergleichsweise teuer, schwer und voluminös werden.

Eine Verlangsamung der Taktung (Schaltzeit) ist oftmals unerwünscht, da die Taktung entsprechend an andere Anforderungen angepasst ist.

Das Stand der Technik Dokument US 2015 / 260 429 A1 offenbart, dass ein Linearregler (oder zumindest seine dissipativsten Komponenten) zusammen mit einem Heizelement angeordnet werden kann und dass beide in das zu erwärmende Medium eingetaucht werden können, so dass der Verlust im Linearregler seine Wärme in das zu erwärmende Medium einbringt.

Das Stand der Technik Dokument DE10 2010 028 533 A1 offenbart ein Haushaltsgerät, mit einer Steuervorrichtung, mindestens einer Serienschaltung, die einen mittels der Steuervorrichtung steuerbaren ersten Schalter, einen mittels der Steuervorrichtung steuerbaren zweiten Schalter und einen zwischen den beiden Schaltern angeordneten elektrischen Verbraucher aufweist, der mittels der beiden Schalter allpolig von einem eine Versorgungsspannung für das Haushaltsgerät bereitstellenden, elektrischen Versorgungsnetz trennbar ist, und mit einer zum Überprüfen der Funktionstüchtigkeit des elektrischen Verbrauchers vorgesehenen Schaltungsanordnung.

Das Stand der Technik Dokument US 2012 / 008 927 A1 offenbart ein Heizsystem für ein Fluidleitungssystem, insbesondere ein derartiges System in einem Kraftfahrzeug, bei dem mindestens ein elektrisches Heizelement mindestens einer Fluidleitung zugeordnet ist, wobei das Heizelement mit einer elektrischen Betriebsspannung zum Anlegen einer bestimmten Heizleistung an die Fluidleitung versorgt wird.

Es ist daher Aufgabe der vorliegenden Erfindung, eine Anordnung umfassend einen wärmeabgebenden Widerstand, eine Steuerungsvorrichtung zum Schalten des Widerstandes sowie ein (insbesondere geerdetes) Bauteil, das auf einem Potential ohne direkten Bezug zu einer Ansteuerspannung liegt, insbesondere ein Gehäuse und/oder Chassisbauteil, vorzuschlagen, wobei der erste Widerstand in räumlicher Nähe zu dem Bauteil, insbesondere Gehäuse oder Chassisbauteil, angeordnet ist, wobei Störungen aufgrund des Schaltens des Widerstandes auf einfache Art und Weise reduziert werden sollen. Weiterhin ist es Aufgabe der Erfindung, ein entsprechendes Steuerungsverfahren vorzuschlagen.

Diese Aufgabe wird durch die Merkmale des Anspruchs 1 gelöst.

Insbesondere wird die Aufgabe gelöst durch eine Anordnung, umfassend einen wärmeabgebenden Widerstand, eine Steuerungsvorrichtung zum Schalten des Widerstandes sowie ein, insbesondere geerdetes, Bauteil, das auf einem Potential ohne (direkten) Bezug zu einer Ansteuerspannung, insbesondere ein Gehäuse oder Chassisbauteil, liegt, wobei der erste Widerstand in räumlicher Nähe zu dem Bauteil, insbesondere Gehäuse, angeordnet ist und einen ersten und einen zweiten Teil-Widerstand, die zueinander in Reihe geschaltet sind, aufweist, wobei die Steuerungsvorrichtung mindestens eine Schaltvorrichtung umfasst, wobei der erste Teil-Widerstand, die Schaltvorrichtung und der zweite Teil-Widerstand in der genannten Reihenfolge in Reihe geschaltet sind und somit eine Reihenschaltung ausbilden Vorzugsweise bilden der erste Teil-Widerstand und das Bauteil eine erste Teil-Kapazität sowie der zweite Widerstand und das Bauteil eine zweite Teil-Kapazität aus, wobei die Teil-Kapazitäten insbesondere derart ausgebildet sind, dass beim Schalten des Widerstandes ein in der ersten Teil-Kapazität fließender Strom zumindest teilweise durch die zweite Teil-Kapazität aufgenommen wird oder umgekehrt.

Gemäß einem Kerngedanken der Erfindung ist die Schaltvorrichtung zwischen dem ersten Teil-Widerstand und dem zweiten Teil-Widerstand angeordnet. Dadurch kann sich (beim Einschalten der Schaltvorrichtung) eine Spannung über die Widerstände (insbesondere gleichmäßig) aufteilen, was zu einem Stromfluss in den (parasitären) Kapazitäten (bzw. Teil-Kapazitäten) führen kann. Dabei kann ein Strom, der in der ersten Teil-Kapazität fließt, (direkt) von der zweiten Teil-Kapazität (oder umgekehrt, d.h. der Strom, der in der zweiten Teil-Kapazität fließt, von der ersten Teil-Kapazität) aufgenommen werden. Dadurch fließt weniger (oder kein) Strom über eine Erdanbindung. Dadurch werden auf einfache Art und Weise Störungen aufgrund des Schaltens des Widerstandes reduziert. Unter einem Schalten des Widerstandes ist insbesondere ein Einschalten und/oder ein Ausschalten des Widerstandes zu verstehen. Beim Einschalten des Widerstandes kann es sich ggf. um ein (erstmaliges) Einschalten des Widerstandes handeln, bei dem dieser erstmalig hochgefahren wird (nach einer längeren Pause von beispielsweise mindestens 10 Sekunden oder mindestens einer Minute). Ein Ausschalten des Widerstandes kann demgemäß insbesondere als ein endgültiges (zumindest für die Dauer von mindestens 10 Sekunden oder mindestens einer Minute) Herunterfahren des Widerstandes verstanden werden (bzw. als Trennen des Widerstandes von der Stromquelle). Unter einem Schalten (Ein- bzw. Ausschalten) kann es sich jedoch auch um Schaltvorgänge handeln, die durch die Steuerung der Schaltvorrichtung selbst (z.B. PWM-Steuerung) vorgegeben sind. Hier wechselt dann die Schaltvorrichtung vorzugsweise zwischen einem eingeschalteten Zustand (in dem diese Strom durchlässt) und einem ausgeschalteten Zustand (in dem ein Strom blockiert wird). Die Frequenz für Schaltvorgänge bzw. Einschaltvorgänge der Schaltvorrichtung kann insbesondere bei mindestens 1 kHz, vorzugsweise mindestens 8 kHz liegen. In diesem Sinne kann der Widerstand als eingeschaltet betrachtet werden, wenn die Schaltvorrichtung einen Strom durchlässt und als ausgeschaltet, wenn die Schaltvorrichtung einen derartigen Strom blockiert. Der Stromfluss durch den Widerstand hängt dann wiederum von weiteren Komponenten ab, so dass der Stromfluss im ausgeschalteten Zustand der Schaltvorrichtung nicht unbedingt null sein muss, aber durchaus (üblicherweise) Null werden kann.

Auch bei einer ggf. vorliegenden oszillierenden Ansteuerung (insbesondere PWM-Ansteuerung) kann es zu (äußerst) kurzen (z.B. durch die einzelnen Pulse getrennten) Unterbrechungen in der Stromversorgung kommen. Während dieser (sehr kurzen) Unterbrechungen kann sich der Widerstand (insbesondere Heizwiderstand) jedoch immer noch im eingeschalteten Zustand befinden in dem Sinne, dass die Heizwirkung des Widerstandes weiter vorliegen soll (dieser also nicht endgültig ausgeschaltet ist). Bezogen auf die Schaltvorrichtungen kann zwischen einer Einschaltzeitdauer (also einer Zeitdauer, in der die Schaltvorrichtung Strom nicht sperrt) und einer Ausschaltzeitdauer (also einer Zeitdauer, in der die Schaltvorrichtung den Strom sperrt) unterschieden werden. Wenn bei der Schaltvorrichtung auf den Zeitpunkt der Inbetriebnahme des Widerstandes Bezug genommen wird, soll insbesondere von einem "erstmaligen" Einschalten der Schaltvorrichtung die Rede sein. Auch hier soll ein erstmaliges Einschalten, insbesondere als Einschalten nach einer Unterbrechung von mindestens 10 Sekunden oder mindestens einer Minute verstanden werden. Genauso soll ein endgültiges Ausschalten, bedeuten, dass die Schaltvorrichtung für mindestens 10 Sekunden, vorzugsweise mindestens einer Minute keinen Strom durchlässt bzw. ausgeschaltet ist.

Unter einer "räumlichen Nähe" zwischen dem wärmeabgebenden Widerstand und dem Bauteil (z. B. Gehäuse) soll insbesondere ein (Minimal-) Abstand von weniger 1 cm, insbesondere weniger als 0,5 cm zwischen Widerstand und Bauteil verstanden werden. Der "Minimalabstand" ist der kleinste Abstand, wenn ein Abstand zwischen Widerstand und Bauteil (räumlich, d.h. entlang einer Erstreckung eines Zwischenraumes) nicht konstant ist. Widerstand und Bauteil sollen jedoch insofern voneinander beabstandet sein, dass zwischen Widerstand und Gehäuse kein Kurzschluss ausgebildet ist. Bei dem (ersten) Widerstand handelt es sich vorzugsweise um den Widerstand einer elektrischen Heizeinrichtung, insbesondere elektrischen Schichtheizeinrichtung. Elektrische Schichtheizeinrichtungen umfassen einen Heizwiderstand, der sich flächig erstreckt und beim Durchleiten eines elektrischen Stroms erwärmt wird. Generell handelt es sich bei dem Widerstand um einen Widerstand, der zur Wämeabfuhr in räumlicher Nähe zu einem (insbesondere geerdeten) Bauteil, das vorzugsweise auf einem Potential ohne direkten Bezug zu einer Ansteuerspannung liegt, insbesondere zu einem Gehäuse und/oder ein Chassisbauteil, angeordnet ist. Bei dem Widerstand kann es sich generell um einen Heiz-Widerstand handeln, also dasjenige Bauteil, über das in einer Heizeinrichtung Wärme zur Heizung erzeugt wird, oder um einen anderen Widerstand, der ggf. gekühlt werden muss.

Vorzugsweise entspricht die erste Teil-Kapazität mindestens 30 %, weiter vorzugsweise mindestens 40 % und/oder höchstens 70 %, vorzugsweise höchstens 60 % der zweiten Teil-Kapazität. In einer Ausführungsform kann die erste Teil-Kapazität (zumindest im Wesentlichen) der zweiten Teil-Kapazität entsprechen. Unter einem "Entsprechen" ist in diesem Zusammenhang insbesondere der jeweilige (miteinander zu vergleichende) Kapazitätswert (in Farad) zu verstehen. Bei (etwa) gleicher Kapazität kann sich die Spannung über die Teil-Widerstände gleichmäßig aufteilen, was zu einem Stromfluss in den jeweiligen (parasitären) Kapazitäten führen kann. Im Idealfall fließt dann kein Strom mehr über eine Erdanbindung.

In der Ausführungsform kann der erste Teil-Widerstand mindestens 30 %, vorzugsweise mindestens 40 % und/oder höchstens 70 %, vorzugsweise höchstens 60 % des zweiten Teil-Widerstands entsprechen. Insbesondere kann der erste Teil-Widerstand (zumindest im Wesentlichen) dem zweiten Teil-Widerstand entsprechen. Hier ist unter einem "Entsprechen" ein Vergleich der Widerstandswerte (in Ohm) zu verstehen. Wenn der erste Teil-Widerstand also beispielsweise 30 % des zweiten Teil-Widerstandes entspricht, bedeutet dies also z.B., dass der erste Teil-Widerstand 300 Ohm aufweist und der zweite Teil-Widerstand 1000 Ohm.

Die Schaltvorrichtung kann einen Transistor, insbesondere MOSFET oder IGBT, vorzugsweise auf Basis von Silizium und/oder Siliziumkarbid und/oder Galliumarsenid, umfassen.

Der wärmeabgebende Widerstand kann ein Heizschicht-Widerstand sein.

Weiterhin kann eine Stützungseinrichtung, insbesondere umfassend eine oder mehrere Kapazitäten, beispielsweise parallel zum wärmeabgebenden Widerstand und/oder der Schaltvorrichtung vorgesehen sein.

Die Steuervorrichtung kann zur pulsweitenmodulierten Ansteuerung des wärmeabgebenden Widerstandes ausgebildet sein.

Weiterhin kann eine Spannungsversorgung, insbesondere eine Gleichspannungsquelle (Gleichspannungsversorgung) vorgesehen sein. Eine solche Spannungsquelle (Spannungsversorgung) kann jedoch ggf. auch extern bereitgestellt werden, so dass die Anordnung lediglich entsprechende Anschlüsse zum Anschließen einer Spannungsquelle (Spannungsversorgung) aufweist.

Die Steuervorrichtung ist vorzugsweise zur Schaltung des Widerstandes mit einer Frequenz von mindestens 1 kHz, vorzugsweise mindestens 8 kHz und/oder höchstens 250 kHz, weiter vorzugsweise höchstens 180 kHz ausgebildet. Die Schaltfrequenz soll hier insbesondere diejenige Frequenz sein, die durch Einschaltvorgänge der Schaltvorrichtung definiert ist. Werden beispielsweise 1000 Einschaltvorgänge pro Sekunde durchgeführt (mit entsprechend 1000 Ausschaltvorgängen), soll eine Schaltfrequenz von insbesondere 1 kHz vorliegen. Insoweit eine PWM-Ansteuerung (pulsweitenmodulierte Ansteuerung) realisiert ist, ist eine Frequenz (Taktrate) der PWM-Ansteuerung vorzugsweise in einem Bereich von 1 kHz bis 250 kHz, weiter vorzugsweise von 8 kHz bis 180 kHz. Eine Impulsbreite (Tastgrad) der PWM-Ansteuerung kann vorzugsweise im Bereich von 1 % bis 100 % eines Taktes sein.

Die obengenannte Aufgabe wird weiterhin gelöst durch ein Steuerungsverfahren, unter Verwendung der obigen Anordnung, zum Schalten eines in räumlicher Nähe zu einem (insbesondere geerdeten), Bauteil, das auf einem Potential ohne (direkten) Bezug zu einer Ansteuerspannung liegt, insbesondere einem Gehäuse oder Chassisbauteil angeordneten wärmeabgebenden Widerstand mit einem ersten und einem zweiten Teil-Widerstand, wobei der erste Teil-Widerstand und das Bauteil eine erste Teil-Kapazität ausbildet und der zweite Widerstand und das Bauteil eine zweite Teil-Kapazität ausbildet, wobei beim Schalten des Widerstandes ein in der ersten Teil-Kapazität fließender Strom zumindest teilweise durch die zweite Teil-Kapazität aufgenommen wird oder umgekehrt.

Vorzugsweise wird der wärmeabgebende Widerstand pulsweitenmoduliert angesteuert und/oder mit einer Frequenz von mindestens 1 kHz, vorzugsweise mindestens 8 kHz und/oder höchstens 250 kHz, vorzugsweise höchstens 180 kHz geschaltet. Weitere Verfahrensschritte ergeben sich aus der Erläuterung der Anordnung (insbesondere deren funktionaler Merkmale).

Die obengenannte Aufgabe wird weiterhin durch eine elektrische Heizeinrichtung, insbesondere Schichtheizeinrichtung, umfassend eine Anordnung der oben beschriebenen Art und/oder ausgebildet zur Durchführung des oben beschriebenen Steuerungsverfahrens gelöst. Hinsichtlich der Vorteile der elektrischen Heizeinrichtung sowie des Steuerungsverfahrens wird auf die Ausführungen zur oben beschriebenen Anordnung verwiesen. Die elektrische Heizeinrichtung kann auch einen (getakteten) Drahtheizer oder ein PTC-Element als Heizelement umfassen.

Die elektrische Schichtheizung kann eine Heizschicht umfassen, die einen elektrischen Widerstand ausbildet und durch Fließen eines Stroms durch die Heizschicht erwärmt wird, so dass Wärme zum Heizen abgegeben werden kann.

Die Heizschicht (Heizbeschichtung) kann beispielsweise in einem Plasmabeschichtungsverfahren, insbesondere Plasmaspritzen, oder in einem Siebdruckverfahren oder als Widerstandspaste, insbesondere auf die Isolierschicht, aufgetragen werden. In dem Plasmabeschichtungsverfahren kann beispielsweise zunächst eine elektrisch leitende Schicht, insbesondere auf die Isolierschicht, aufgetragen werden. Aus der elektrisch leitfähigen Schicht können anschließend Bereiche ausgeschnitten werden, so dass eine Leiterbahn oder mehrere Leiterbahnen übrigbleiben. Bevorzugt kommt jedoch eine Maskiertechnik zum Einsatz. Die Leiterbahnen können dann den Heizwiderstand oder mehrere Heizwiderstände bilden. Die genannten Bereiche können alternativ zu einer Maskiertechnik, beispielsweise mittels eines Lasers aus der leitfähigen Schicht herausgeschnitten werden. Die Heizbeschichtung kann beispielsweise eine Metallschicht sein und ggf. Nickel und/oder Chrom enthalten oder aus diesen Materialien bestehen. Beispielsweise können 70-90 % Nickel und 10-30 % Chrom verwendet werden, wobei ein Verhältnis von 80 % Nickel und 20 % Chrom als gut geeignet betrachtet wird.

Die Heizbeschichtung kann beispielsweise eine Fläche von mindestens 5 cm², vorzugsweise mindestens 10 cm² und/oder höchstens 500 cm², vorzugsweise höchstens 200 cm², einnehmen.

Die Heizbeschichtung hat vorzugsweise eine Höhe (Dicke) von mindestens 5 µm, vorzugsweise mindestens 10 µm und/oder höchstens einem 1 mm, vorzugsweise höchstens 500 µm, noch weiter vorzugsweise höchstens 30 µm, noch weiter vorzugsweise höchstens 20 µm. Eine durch die Heizbeschichtung definierte Leiterbahn kann mindestens 1 mm, vorzugsweise mindestens 3 mm, noch weiter vorzugsweise mindestens 5 mm, noch weiter vorzugsweise mindestens 10 mm, noch weiter vorzugsweise mindestens 30 mm breit sein. Unter "Breite" soll die Ausdehnung der Leiterbahn senkrecht zu ihrer Längserstreckung (die üblicherweise auch die Richtung des Stromflusses definiert) verstanden werden.

Die erfindungsgemäße Anordnung (und insbesondere eine ggf. vorgesehene Heizbeschichtung) kann zum Betrieb im Niedervoltbereich, vorzugsweise für 12 Volt, 24 Volt oder 48 Volt ausgelegt sein. Unter "Niedervoltbereich" soll vorzugsweise eine Betriebsspannung von unter 100 Volt, insbesondere unter 60 Volt (Gleichspannung) verstanden werden. Vorzugsweise ist die erfindungsgemäße Anordnung (und insbesondere eine ggf. vorgesehene Heizbeschichtung) zum Betrieb im Hochvoltbereich, vorzugsweise für über 100 V Volt oder über 250 V oder über 500 V, z.B. in einem Bereich von 250-800 V, ausgelegt. In einem höheren Spannungsbereich sind die oben erläuternden, zu vermeidenden, Effekte beim Stand der Technik besonders ausgeprägt. Im Allgemeinen ist die Anordnung und insbesondere eine ggf. vorgesehene Heizbeschichtung für einen Betrieb mit Gleichstrom ausgelegt.

Die Schichtheizung bzw. Heizbeschichtung kann grundsätzlich wie in WO 2013/186106 A1 und/oder WO 2013/030048 A1 beschrieben, ausgebildet sein. Dort werden Heizungen beschrieben, die eine elektrische Heizschicht aufweisen, die sich bei Anlegen einer elektrischen Spannung (bzw. dem Fließen eines Stroms) erwärmt.

Die bereits erwähnten Widerstände können grundsätzlich aus einem beliebigen elektrisch leitfähigen Material gefertigt sein, sind jedoch vorzugsweise aus Metall.

Die erfindungsgemäße Anordnung und/oder das erfindungsgemäße Verfahren und insbesondere die elektrische Heizeinrichtung sind vorzugsweise für die Verwendung in einem Fahrzeug, insbesondere Kraftfahrzeug vorgesehen und/oder entsprechend konfiguriert.

Weitere Ausführungsformen ergeben sich aus den Unteransprüchen.

Nachfolgend wird die Erfindung anhand eines Beispiels gemäß dem Stand der Technik sowie einem ersten Ausführungsbeispiel beschrieben, die anhand der Abbildungen näher erläutert werden. Hierbei zeigen:
- Fig. 1: Eine Anordnung zur Spannungsversorgung und Schaltung eines in der Nähe eines Gehäuses angeordneten Widerstandes gemäß dem Stand der Technik; und
- Fig. 2: eine Anordnung zur Spannungsversorgung und Schaltung eines in der Nähe eines Gehäuses angeordneten Widerstandes gemäß einem ersten Ausführungsbeispiel der Erfindung während eines ersten Schaltvorgangs.

In der nachfolgenden Beschreibung werden für gleiche und gleichwirkende Teile dieselben Bezugsziffern verwendet.

Fig. 1 zeigt eine schematische Ansicht einer Anordnung mit einem zu schaltenden elektrischen Widerstand gemäß dem Stand der Technik. Der zu schaltende elektrische Widerstand ist hier symbolisch durch die Widerstände R1 bis R4 dargestellt. Grundsätzlich handelt es sich hier jedoch um nur einen (durchgehenden) Widerstand. Insofern können die schematisch dargestellten Widerstände R1 bis R4 auch als Widerstands-Abschnitte des Widerstands aufgefasst werden (also in Serie geschaltete Einzelabschnitte des Widerstandes). Alternativ kann es sich hier jedoch auch tatsächlich um voneinander strukturell abgegrenzte Widerstände (beispielsweise vier) handeln. Der Widerstand R1 bis R4 ist zur Wärmeabfuhr (Kühlung) nahe an einem Gehäuse 10 angeordnet.

Die in Fig. 1 gezeigten Kondensatoren C1 bis C5 entsprechen einer symbolischen Darstellung einer Kapazität des Widerstandes, die aus der nahen Anordnung an dem Gehäuse resultiert. In der abschnittsweisen Betrachtung des Widerstandes R1 bis R4 mit vier Abschnitten R1, R2, R3 und R4 können diese Kapazitäten dann einzelnen Abschnitten zugeordnet sein.

Weiterhin ist ein Schalter M (konkret ein Transistor, insbesondere MOSFET oder IGBT) vorgesehen, der ein- und ausgeschaltet werden kann. Wird der Schalter M ausgeschaltet, liegt der Widerstand R1 bis R4 auf Versorgungsspannung, die durch eine Spannungsversorgung 11 bereitgestellt wird. Wird der Schalter M nun (erstmalig) eingeschaltet, verändert sich die Spannung über dem Widerstand R1 bis R4. Das (in Fig. 1) untere Ende von R4 geht gegen 0 Volt, während das (in Fig. 1) obere Ende von R1 weiterhin auf Versorgungsspannung liegt. Dies hat zur Folge, dass die Kapazität, gemäß der schematischen Darstellung C1 bis C5, ganz oder teilweise entladen wird. Die Kapazität C1 wird beispielsweise vollständig entladen, während C3 auf die halbe Versorgungsspannung entladen wird. Die halbe Versorgungsspannung entspricht der mittleren Spannung des vollständigen Widerstandes.

Im Mittel wird die vollständige Kapazität um die halbe Versorgungsspannung entladen.

Wird nun der Schalter M (endgültig) ausgeschaltet, wiederholt sich grundsätzlich das eben Beschriebene. Die Kapazitäten werden jedoch nicht entladen, sondern bis zur Versorgungsspannung aufgeladen. Dieses Laden und Entladen der Kondensatoren C1 bis C5 kann je nach Geschwindigkeit der Schaltung zu deutlichen EMV-Störungen führen (sowohl leitungsgebunden als auch abgestrahlt).

Das Bezugszeichen 12 kennzeichnet einen Zwischenkreis-Kondensator. Weitere Kondensatoren 13 sowie Induktivitäten 14 sind Bestandteile einer Netznachbildung (englisch: Line Impedance Stabilization Network, LISN) und für die vorliegende Erfindung nicht weiter von Bedeutung. Durch das Bezugszeichen 15 ist eine Erdanbindung des Gehäuses 10 symbolisiert.

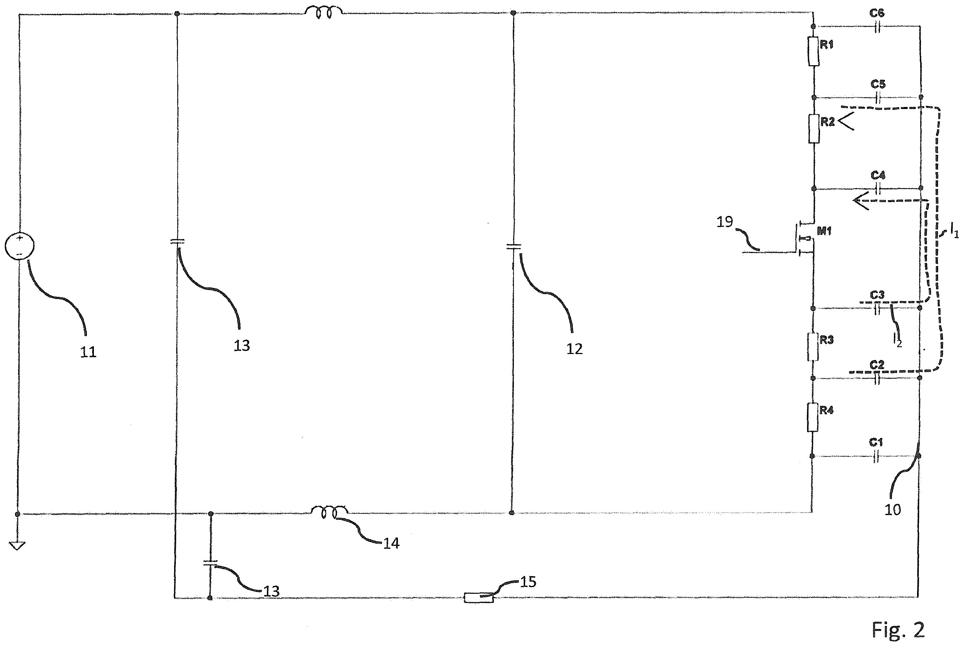

In Fig. 2 ist eine Anordnung analog Fig. 1 gezeigt, jedoch mit erfindungsgemäßen Unterschieden. Die Elemente/Einheiten mit dem Bezugszeichen 10 bis 15 entsprechen der Anordnung gemäß dem Stand der Technik gemäß Fig. 1, so dass diesbezüglich auf die Ausführungen zum Stand der Technik verwiesen wird.

Im Unterschied zum Stand der Technik umfasst die Anordnung gemäß Fig. 2 einen Schalter M1, der nicht wie der Schalter M (vgl. Fig. 1) am Ende (bzw. einem Anschluss) des Widerstandes R1-R4 angeordnet ist, sondern zwischen Teil-Widerständen R1, R2 bzw. R3, R4 des Widerstandes R1 bis R4. Auch hier kann es so sein, dass die Teil-Widerstände R1, R2 bzw. R3, R4 wiederum aus mehreren Untereinheiten bestehen, die voneinander strukturell abgegrenzt bzw. abgrenzbar sind), beispielsweise eine Untereinheit R1 und eine Untereinheit R2, die gemeinsam den ersten Teil-Widerstand R1, R2 bilden oder eine Untereinheit R3 sowie eine Untereinheit R4, die gemeinsam den zweiten Teil-Widerstand R3, R4 bilden. Bei den Teil-Widerständen R1, R2 bzw. R3, R4 kann es sich jedoch auch um nicht voneinander (strukturell) getrennte Widerstände handeln, so dass der jeweilige Teil-Widerstand R1, R2 bzw. R3, R4 nicht weiter unterteilt ist. In jedem Fall sind jedoch die Teil-Widerstände R1, R2 sowie R3, R4 durch die Schaltvorrichtung M1 getrennt bzw. (hinsichtlich der Stromleitung) trennbar.

Die mittige Ansteuerung gemäß Fig. 2 hat den Vorteil, dass sich eine verteilte Kapazität C1 bis C6 (die sich aus dem Gehäuse 10 sowie dem Widerstand R1-R4 ergibt) ausgleicht und somit (idealerweise) kein Strom über eine Erdanbindung des (Geräte-) Gehäuses 10 fließt. Hierzu ist die Schaltvorrichtung (Transistor) M1 in der kapazitiven Mitte des Widerstandes angebracht.

Die Kondensatoren C1 bis C6 entsprechen einer symbolischen Darstellung einer Kapazität, die dem Widerstand zugeordnet ist und durch die räumlich nahe Anbindung des Widerstandes an dem Gehäuse entsteht.

Ein Abschnitt oberhalb der Schaltvorrichtung M1 (bzw. der erste Teil-Widerstand R1, R2) ist im ausgeschalteten Zustand der Schaltvorrichtung (komplett) auf Versorgungsspannung, während der (in Fig. 2) untere Abschnitt (bzw. der zweite Teil-Widerstand R3, R4) auf der Masse der Spannungsversorgung liegt.

Beim (erstmaligen) Einschalten der Schaltvorrichtung M1 teilt sich die Spannung über die Widerstände R1, R2 bzw. R3, R4 gleichmäßig auf, was zu einem Stromfluss in den (parasitären) Kapazitäten C1 bis C6 führt.

Beim Einschalten der Schaltvorrichtung M1 wird der Strom (I₁), der beispielsweise in C2 fließt, (direkt) von C5 aufgenommen. Gleiches gilt für den Strom (I₂) bezüglich der Kapazitäten C3 und C4. Zumindest im Idealfall fließt dann kein Strom mehr über eine Erdanbindung. Das Gleiche (in umgekehrter Richtung) geschieht, wenn die Schaltvorrichtung M1 ausgeschaltet wird.

Die hier vorgeschlagene Schaltanordnung kann weiterhin Schwierigkeiten umgehen, die bei der von den Erfindern entwickelten parallelen (noch nicht veröffentlichten) Lösung mit zwei Schaltvorrichtungen, die zeitsynchron angesteuert werden und sich an den beiden Enden des Widerstandes R1 bis R4 befinden, auftreten können. Bei der vorliegenden Lösung muss lediglich bei der Aufteilung des Widerstandes darauf geachtet werden, dass die Kapazitätsbeträge des (in Fig. 2) oberen Teil-Widerstandes und des (in Fig. 2) unteren Teil-Widerstandes R3, R4 vorteilhaft eingestellt sind, insbesondere zumindest etwa gleich sind.

Insgesamt kann auf einfache Art und Weise eine Schaltung realisiert werden, die vergleichsweise kostengünstig und einfach verhindert, dass EMV-Störungen entstehen bzw. die es ermöglicht, dass ein Grundlevel reduziert wird.

Dadurch, dass sich (common mode) Störungen reduzieren, können kürzere Schaltzeiten gewählt werden, was Schaltverluste reduziert. Dabei ist keine (wesentliche) Verschlechterung einer Wärmeanbindung einer zu kühlenden Komponente zu erwarten.

### Bezugszeichen

- C1-C5: Kondensatoren (als symbolische Darstellung einer Gesamt-Kapazität)
- C1-C6: Kondensatoren (als symbolische Darstellung einer Gesamt-Kapazität)
- M: Schaltvorrichtung
- M1: Schaltvorrichtung
- R1-R4: Widerstände (als symbolische Darstellung eines Gesamt-Widerstandes)
- 10: Gehäuse
- 11: Spannungsversorgung
- 12: Zwischenkondensator
- 13: Kapazität
- 14: Induktivität
- 15: Erdanbindung
- 19: Steuerungseinrichtung

## Patentansprüche

1. Anordnung, umfassend einen wärmeabgebenden Widerstand (R1 bis R4), eine Steuerungsvorrichtung zum Schalten des Widerstandes (R1 bis R4) sowie ein, insbesondere geerdetes, Bauteil, das auf einem Potential ohne direkten Bezug zu einer Ansteuerspannung, insbesondere ein Gehäuse oder Chassisbauteil (10), liegt,
wobei der Widerstand (R1 bis R4) in räumlicher Nähe zu dem Bauteil, insbesondere Gehäuse (10), angeordnet ist und einen ersten (R1, R2) und einen zweiten (R3, R4) Teil-Widerstand, die zueinander in Reihe geschaltet sind, aufweist,
wobei die Steuerungsvorrichtung mindestens eine Schaltvorrichtung (M1) zur Schaltung des wärmeabgebenden Widerstandes umfasst,
wobei der erste Teil-Widerstand (R1, R2), die Schaltvorrichtung (M1) und der zweite Teil-Widerstand (R3, R4) in der genannten Reihenfolge in Reihe geschaltet sind und somit eine Reihenschaltung ausbilden,
**dadurch gekennzeichnet, dass**
der erste Teil-Widerstand (R1, R2) und das Bauteil eine erste Teil-Kapazität ausbilden und der zweite Widerstand (R3, R4) und das Bauteil eine zweite Teil-Kapazität ausbilden, wobei die Teil-Kapazitäten derart ausgebildet sind, dass beim Schalten des Widerstandes ein in der ersten Teil-Kapazität fließender Strom zumindest teilweise durch die zweite Teil-Kapazität aufgenommen wird oder umgekehrt.

2. Anordnung nach Anspruch 1,
**dadurch gekennzeichnet, dass**
die erste Teil-Kapazität mindestens 30 %, vorzugsweise mindestens 40 % und/oder höchstens 70 %, vorzugsweise höchsten 60 % der zweiten Teil-Kapazität entspricht, weiter vorzugsweise zumindest im Wesentlichen der zweiten Teil-Kapazität entspricht.

3. Anordnung nach Anspruch 1 oder 2,
**dadurch gekennzeichnet, dass**
der erste Teil-Widerstand (R1, R2) mindestens 30 %, vorzugsweise mindestens 40 % und/oder höchstens 70 %, vorzugsweise höchsten 60 % des zweiten Teil-Widerstandes entspricht, weiter vorzugsweise zumindest im Wesentlichen dem zweiten Teil-Widerstand (R3, R4) entspricht.

4. Anordnung nach Anspruch 1, 2 oder 3,
**dadurch gekennzeichnet, dass**
die Schaltvorrichtung (M1) einen Transistor, insbesondere MOSFET oder IGBT, vorzugsweise auf Basis von Silicium und/oder Siliciumcarbid und/oder Galliumarsenid, umfasst.

5. Anordnung nach einem der vorhergehenden Ansprüche,
**dadurch gekennzeichnet, dass**
der wärmeabgebende Widerstand (R1 bis R4) ein Heizschicht-Widerstand ist.

6. Anordnung nach einem der vorhergehenden Ansprüche,
**gekennzeichnet durch**
eine Stützungseinrichtung, insbesondere umfassend eine oder mehrere Kapazitäten, beispielsweise parallel zum wärmeabgebenden Widerstand und/oder der Schaltvorrichtung (M1).

7. Anordnung nach einem der vorhergehenden Ansprüche,
**dadurch gekennzeichnet, dass**
die Steuervorrichtung zur pulsweitenmodulierten Ansteuerung des wärmeabgebenden Widerstandes (R1 bis R4) ausgebildet ist.

8. Anordnung nach einem der vorhergehenden Ansprüche,
**gekennzeichnet durch**
eine Spannungsversorgung (11), insbesondere eine Gleichspannungsquelle.

9. Anordnung nach einem der vorangehenden Ansprüche,
**dadurch gekennzeichnet, dass**
die Steuervorrichtung zur Schaltung des Widerstandes mit einer Frequenz von mindestens 1 kHz, vorzugsweise mindestens 8 kHz und/oder höchstens 30 kHz, vorzugsweise höchstens 25 kHz ausgebildet ist.

10. Steuerungsverfahren, unter Verwendung der Anordnung nach einem der vorangehenden Ansprüche, zum Schalten eines in räumlicher Nähe zu einem, insbesondere geerdeten, Bauteil, das auf einem Potential ohne direkten Bezug zu einer Ansteuerspannung liegt, insbesondere einem Gehäuse (10) oder Chassis-Bauteil, angeordneten wärmeabgebenden Widerstandes (R1 bis R4) mit einem ersten (R1, R2) und einem zweiten (R3, R4) Teil-Widerstand, wobei der erste Teil-Widerstand (R1, R2) und das Bauteil eine erste Teil-Kapazität ausbildet und der zweite Widerstand (R3, R4) und das Bauteil eine zweite Teil-Kapazität ausbildet, wobei beim Schalten des Widerstandes ein in der ersten Teil-Kapazität fließender Strom zumindest teilweise durch die zweite Teil-Kapazität aufgenommen wird oder umgekehrt.

11. Steuerungsverfahren nach Anspruch 10,
**dadurch gekennzeichnet, dass**
der wärmeabgebende Widerstandes pulsweitenmoduliert angesteuert wird und/oder mit einer Frequenz von mindestens 1 kHz, vorzugsweise mindestens 8 kHz und/oder höchstens 250 kHz, vorzugsweise höchstens 180 kHz geschaltet wird.

12. Elektrische Heizeinrichtung, insbesondere Schichtheizeinrichtung, umfassend eine Anordnung nach einem der Ansprüche 1 bis 9 und/oder ausgebildet zur Durchführung des Steuerungsverfahrens zur Steuerung des elektrischen Widerstandes der Heizeinrichtung nach einem der Ansprüche 10 oder 11.

## Claims

1. Arrangement, comprising a heat-emitting resistor (R1 to R4), a control device for switching the resistor (R1 to R4) and an, in particular earthed, component that is at a potential without direct reference to a drive voltage, in particular a housing or chassis component (10),
wherein the resistor (R1 to R4) is arranged in spatial proximity to the component, in particular housing (10), and has a first (R1, R2) and a second (R3, R4) partial resistor connected in series with one another,
wherein the control device comprises at least one switching device (M1) for switching the heat-emitting resistor,
wherein the first partial resistor (R1, R2), the switching device (M1) and the second partial resistor (R3, R4) are connected in series in the stated order and thus form a series connection, **characterized in that**
the first partial resistor (R1, R2) and the component form a first partial capacitance and the second resistor (R3, R4) and the component form a second partial capacitance, wherein the partial capacitances are formed in such a way that upon the switching of the resistor a current flowing in the first partial capacitance is at least partly absorbed by the second partial capacitance, or vice versa.

2. Arrangement according to Claim 1,
**characterized in that**
the first partial capacitance corresponds to at least 30%, preferably at least 40%, and/or at most 70%, preferably at most 60%, of the second partial capacitance, more preferably at least substantially corresponds to the second partial capacitance.

3. Arrangement according to Claim 1 or 2,
**characterized in that**
the first partial resistor (R1, R2) corresponds to at least 30%, preferably at least 40%, and/or at most 70%, preferably at most 60%, of the second partial resistor, more preferably at least substantially corresponds to the second partial resistor (R3, R4).

4. Arrangement according to Claim 1, 2 or 3,
**characterized in that**
the switching device (M1) comprises a transistor, in particular MOSFET or IGBT, preferably based on silicon and/or silicon carbide and/or gallium arsenide.

5. Arrangement according to any of the preceding claims,
**characterized in that**
the heat-emitting resistor (R1 to R4) is a heating layer resistor.

6. Arrangement according to any of the preceding claims,
**characterized by**
a backup apparatus, in particular comprising one or more capacitances, for example in parallel with the heat-emitting resistor and/or the switching device (M1).

7. Arrangement according to any of the preceding claims,
**characterized in that**
the control device is configured for the pulse-width-modulated driving of the heat-emitting resistor (R1 to R4).

8. Arrangement according to any of the preceding claims,
**characterized by**
a voltage supply (11), in particular a DC voltage source.

9. Arrangement according to any of the preceding claims,
**characterized in that**
the control device is configured for switching the resistor with a frequency of at least 1 kHz, preferably at least 8 kHz, and/or at most 30 kHz, preferably at most 25 kHz.

10. Control method, using the arrangement according to any of the preceding claims, for switching a heat-emitting resistor (R1 to R4) having a first (R1, R2) and a second (R3, R4) partial resistor, said heat-emitting resistor being arranged in spatial proximity to an, in particular earthed, component that is at a potential without direct reference to a drive voltage, in particular a housing (10) or chassis component, wherein the first partial resistor (R1, R2) and the component form a first partial capacitance and the second resistor (R3, R4) and the component form a second partial capacitance, wherein upon the switching of the resistor a current flowing in the first partial capacitance is at least partly absorbed by the second partial capacitance, or vice versa.

11. Control method according to Claim 10,
**characterized in that**
the heat-emitting resistor is driven in a pulse-width-modulated manner and/or is switched with a frequency of at least 1 kHz, preferably at least 8 kHz, and/or at most 250 kHz, preferably at most 180 kHz.

12. Electrical heating apparatus, in particular layer heating apparatus, comprising an arrangement according to any of Claims 1 to 9 and/or configured for carrying out the control method for controlling the electrical resistor of the heating apparatus according to any of Claims 10 and 11.

## Revendications

1. Circuit comprenant une résistance de dissipation de chaleur (R1 à R4), un dispositif de commande destiné à commuter la résistance (R1 à R4) et un composant, notamment mis à la masse, qui est à un potentiel sans référence directe à une tension de commande, notamment un boîtier ou composant de châssis (10),
la résistance (R1 à R4) étant disposée à proximité spatiale du composant, en particulier du boîtier (10), et comportant une première (R1, R2) et une deuxième (R3, R4) résistance partielle qui sont montées en série l'une avec l'autre,
le dispositif de commande comprenant au moins un dispositif de commutation (M1) destiné à commuter la résistance de dissipation de chaleur,
la première résistance partielle (R1, R2), le dispositif de commutation (M1) et la deuxième résistance partielle (R3, R4) étant montés en série dans l'ordre mentionné et formant ainsi un circuit série,
**caractérisé en ce que**
la première résistance partielle (R1, R2) et le composant forment une première capacité partielle et la deuxième résistance (R3, R4) et le composant forment une deuxième capacité partielle, les capacités partielles étant conçues de sorte que, lors de la commutation de la résistance, un courant circulant dans la première capacité partielle soit au moins partiellement absorbé par la deuxième capacité partielle, ou inversement.

2. Circuit selon la revendication 1,
**caractérisé en ce que**
la première capacité partielle correspond à au moins 30 %, de préférence au moins 40 % et/ou au plus 70 %, de préférence au plus 60 %, de la deuxième capacité partielle, plus préférablement au moins sensiblement à la deuxième capacité partielle.

3. Circuit selon la revendication 1 ou 2,
**caractérisé en ce que**
la première résistance partielle (R1, R2) correspond à au moins 30 %, de préférence au moins 40 % et/ou au plus 70 %, de préférence au plus 60 %, de la deuxième résistance partielle, plus préférablement au moins sensiblement à la deuxième résistance partielle (R3, R4).

4. Circuit selon la revendication 1, 2 ou 3,
**caractérisé en ce que**
le dispositif de commutation (M1) comprend un transistor, notamment un MOSFET ou un IGBT, de préférence à base de silicium et/ou de carbure de silicium et/ou d'arséniure de gallium.

5. Circuit selon l'une des revendications précédentes, **caractérisé en ce que**
la résistance de dissipation de chaleur (R1 à R4) est une résistance à couche chauffante.

6. Circuit selon l'une des revendications précédentes, **caractérisé par**
un dispositif de support, comprenant notamment un ou plusieurs condensateurs, par exemple en parallèle avec la résistance de dissipation de chaleur et/ou le dispositif de commutation (M1).

7. Circuit selon l'une des revendications précédentes, **caractérisé en ce que**
le dispositif de commande est conçu pour commander en modulation de largeur d'impulsion la résistance de dissipation de chaleur (R1 à R4).

8. Circuit selon l'une des revendications précédentes, **caractérisé par**
une alimentation en courant (11), notamment une source de tension continue.

9. Circuit selon l'une des revendications précédentes, **caractérisé en ce que**
le dispositif de commande est conçu pour commuter la résistance à une fréquence d'au moins 1 kHz, de préférence d'au moins 8 kHz et/ou d'au plus 30 kHz, de préférence d'au plus 25 kHz.

10. Procédé de commande, à l'aide ducircuit selon l'une des revendications précédentes, pour commuter une résistance de dissipation de chaleur (R1 à R4) qui comprend une première (R1, R2) et une deuxième (R3, R4) résistance partielle et qui est disposée à proximité spatiale d'un composant, notamment mis à la masse, qui est à un potentiel sans référence directe à une tension de commande, notamment un boîtier (10) ou un composant de châssis, la première résistance partielle (R1, R2) et le composant formant un premier condensateur partiel et la deuxième résistance (R3, R4) et le composant formant un deuxième condensateur partiel, un courant qui circule dans le premier condensateur partiel étant au moins partiellement absorbé par le deuxième condensateur partiel, ou inversement lors de la commutation de la résistance.

11. Procédé de commande selon la revendication 10, **caractérisé en ce que**
la résistance de dissipation de chaleur est commandée en modulation de largeur d'impulsion et/ou est commutée à une fréquence d'au moins 1 kHz, de préférence d'au moins 8 kHz et/ou d'au plus 250 kHz, de préférence d'au plus 180 kHz.

12. Moyen de chauffage électrique, notamment moyen de chauffage par couche, comprenant un circuit selon l'une des revendications 1 à 9 et/ou conçu pour mettre en œuvre le procédé de commande de la résistance électrique du moyen de chauffage selon l'une des revendications 10 et 11.
